# EUROPEAN PATENT SPECIFICATION

(11) **EP 3 647 032 B1**
(45) Date of publication and mention of the grant of the patent: **30.11.2022**
(21) Application number: 18382764.1
(22) Date of filing: 30.10.2018
(51) Int. Cl.: B29C 70/44, B29C 70/46, B29C 70/12, B29C 70/20, B29D 99/00, B64C 1/14, B64C 3/34, B64C 7/00, F16J 15/10, B29C 33/48, B29L 31/26, B29K 105/26, B29L 31/00

(54) **METHOD FOR MANUFACTURING A RING-SHAPED GASKET FOR AN AIRCRAFT**
VERFAHREN ZUR HERSTELLUNG EINER RINGDICHTUNG FÜR EIN FLUGZEUG
PROCÉDÉ DE FABRICATION D'UN JOINT ANNULAIRE DESTINÉ À UN AVION

(43) Date of publication of application: 06.05.2020
(73) Proprietor: Airbus Operations, S.L., 28906 Getafe (ES)
(72) Inventor: PÉREZ PASTOR, Augusto, 28906 Getafe (ES); CANO CEDIEL, Jose David, 28906 Getafe (ES); NUÑEZ DELGADO, Julio, 28906 Getafe (ES); DÍAZ VÁZQUEZ, Juan Pedro, 28906 Getafe (ES); JIMENEZ VIVAS, Antonio, 28906 Getafe (ES)

(56) References cited:
- EP-A1- 2 939 820
- FR-A1- 2 928 343
- GB-A- 544 732
- US-A- 2 676 823
- US-A1- 2016 001 871

## Description

### Object of the invention

The present invention refers to a method for manufacturing a ring-shaped gasket for an aircraft, in particular, for a manhole of a wing or an empennage and/or for a window frame of a fuselage.

One object of the present invention is to provide a manufacturing method of a ring-shaped gasket that allows to reduce the amount of waste material in order to reduce the unitary cost of each gasket.

It is also an object of the present invention to simplify the method for manufacturing a ring-shaped gasket to thus reduce the manufacturing time.

### Background of the invention

Gaskets are commonly used as an interface between two rigid components. Joints between rigid components are zones with risk of failure, such as leakage of fluids or deformations on the surface of the weaker component, due to the difference on the roughness profile of each one. Gaskets are solid shims that assure a smooth surface for proper seal. There are a lot of joints between rigid components in an aircraft, so that a large amount of gaskets might be needed.

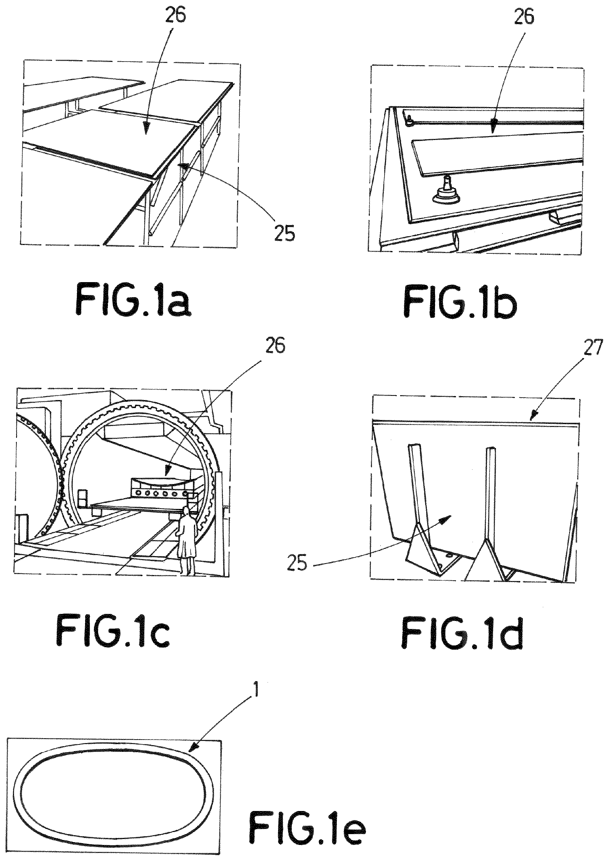

As shown in Figure 1, the current method for manufacturing a ring-shaped gasket consists of:
a) providing a flat mold (25),
b) obtaining a sheet (26) of prepreg composite material, using methods such as automated layup techniques (ATL) on the flat mold,
c) applying vacuum to extract the air trapped and the excess of resin from the sheet (26),
d) curing the sheet (26),
e) demolding the cured sheet (27),
f) machining and trimming the cured sheet (27) so as to obtain the desired shape and thickness of the ring shaped gasket (1).

This method for manufacturing a gasket is time consuming and expensive, since a lot of material is wasted on machining and trimming operations.

The inefficiency of the cost of this method is higher when having a ring-shaped geometry, because the quantity of material that remains on the final piece is much lower than the amount of material used.

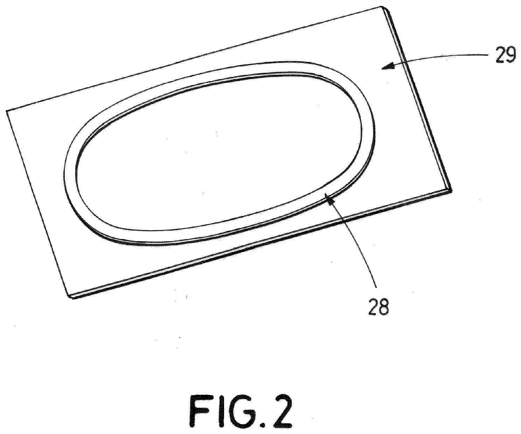

As shown in Figure 2, just a small area (28) of the preform is part of the final piece (around ten percent), while the rest area (29) (around ninety percent) becomes wasted material.

Further, the current process is complicated due to the machining and trimming operations, which involves cutting off large amount of material. These are time-consuming operations that increase the cost of manufacturing a gasket.

GB544732 describes improvements relating to reinforced rubber packing washers, discs, gaskets and oil seals, such that in moulding a rubber packing member reinforced by a stiff core, a method of positioning the core, consisting in interposing one or more layers of rubber-impregnated fabric between the core and a surface of the mould so as to space the core away from such surface.

US2676823 describes a molded sealing ring including, a continuous flat coil of woven glass fibers impregnated with a thermosetting resin for sealing the pores and bonding the convolutions thereof together, certain of the glass fibers extending circumferentially of and being, substantially coextensive with the coil, said convolutions being intimately engaged under heat and extremely high pressure of the magnitude of 10,000 pounds per square inch to provide concentric laminae of woven glass fibers and thermosetting resin and an exterior coating of thermosetting resin.

FR2928343 relates to the design of an aircraft having a fuselage of the composite type and more particularly to that of panels of aircraft fuselage carrying windows. Thus, the document relates to a window-carrying fuselage panel comprising a one-piece composite structure, said structure comprising a main part and at least one opening to receive a window, said structure having, in an area surrounding said opening, a thickness substantially constant and greater than the thickness of the main part of said structure. The invention also relates to an aircraft comprising a composite fuselage, the latter comprising such a panel or a similar panel made of metallic material.

US2016001871 describes aircraft fuel tank access door systems and methods incorporating one or more of an outer fuel tank access door completely encapsulated by a dielectric material and an inner fuel tank access door comprising at least one drainage feature are disclosed. These systems and methods reduce or prevent (i) fuel pooling on the inner fuel tank access door, (ii) moisture pooling between the inner and outer fuel tank access doors, and (iii) p-static build up and lightning attachment to the outer fuel tank access door to increase safety, reduce the likelihood of corrosion and ease installation of the fuel tank access door system.

It would therefore be desirable to provide technical means to simplify the manufacturing process, reducing the amount of wasted material, and therefore decreasing the manufacturing cost.

### Summary of the invention

The present invention overcomes the above mentioned drawbacks by providing an improved manufacturing method for a ring-shaped gasket that reduces the amount of wasted material, and also the manufacturing time and related costs.

One aspect of the present invention refers to a method for manufacturing a ring-shaped gasket for an aircraft, comprising the following steps:
- providing a rod made of prepreg composite material,
- providing a mold having a female part and a male part, at least one of the parts having a groove with the ring-shaped desired configuration,
- placing the rod onto the female part and set the male part over the ring-shaped rod to obtain a ring-shaped preform,
- applying vacuum to debulk the ring-shaped preform,
- curing the ring-shaped preform to obtain a ring-shaped cured preform,
- demolding the ring-shaped cured preform to thus obtain a ring-shaped gasket,
wherein the rod is formed by composite chips.

This way, the amount of material wasted is reduced, since the manufacturing process is carried out using a rod of prepreg composite. Further, since the rod is formed by composite chips, the invention allows using pieces of wasted material that may not be adequate for other applications, such as structural elements.

Further, a manufacturing process for ring-shaped gaskets according to the invention, reduces the manufacturing time of each ring-shaped gasket, since reduces the machining and trimming operation time.

According to a preferred embodiment, after step f) the ring-shaped gasket could be deburred for removing rough edges or protuberances. Further, the ring-shaped gasket can be machined to obtain the desired thickness. This way, it is possible to obtain good surface roughness, achieving low tolerances, and thus improving the quality of the gaskets.

According to another preferred embodiment, the rod comprises glass fiber or carbon fiber.

According to another preferred embodiment, the rod is made of dry carbon fiber where resin is included on a second step following any of the known techniques such as RTM, LRI, RFI or simply pouring it on the fibers.

Preferably, the rod is manufactured using extrusion or pultrusion techniques.

Preferably, step d) is carried out using an autoclave to provide temperature and pressure conditions. Alternatively, step d) is carried out using a press.

Another aspect of the invention refers to a wing for an aircraft having a skin provided with manholes, an inner cover and an outer cover to cover the manholes of the skin and a ring-shaped gasket manufactured according to the invention, wherein the gasket is placed between the inner cover and the skin of the wing.

According to a preferred embodiment, the wing further comprises a seal ring placed between the outer cover and the skin of the wing.

Another aspect of the invention refers to an aircraft having a fuselage comprising a skin, at least one window frame and a ring-shaped gasket manufactured according to the invention, wherein the window frame has an inner face and an outer face, and the ring-shaped gasket is located between the fuselage skin and the inner face of the window frame of the aircraft.

### Brief description of the drawings

For a better comprehension of the invention, the following drawings are provided for illustrative and non-limiting purposes, wherein:
Figure 1 shows schematic views of the prior art manufacturing process of a ring-shaped gasket for an aircraft. Drawing A shows the sheet of prepreg over the flat mold. Drawing B shows the debulking process. Drawing C shows the curing process. Drawing D shows the cured sheet. Drawing E shows the gasket after being demoulded, machined and trimmed.
Figure 2 shows a schematic view of a cured sheet, where the wasted material and the material used for the final piece are depicted.
Figure 3 shows schematic views of the manufacturing process of a ring-shaped gasket for an aircraft according to the invention. Drawing A shows a rod. Drawing B shows the female and the male part of a mold. Drawing C shows the rod set over the female part of the mold. Drawing D shows the debulking process using the vacuum bag. Drawing E shows the demolding process of the cured preform. Drawing F shows the gasket manufactured according to the invention.
Figure 4 shows a schematic view of uncured composite chips.
Figure 5 shows a schematic view of a wing including manholes.
Figure 6 is a detailed view of the manholes of the wing of Figure 5, including a skin, an inner and an outer cover, a seal ring and the ring-shaped gasket obtained according to the invention.
Figure 7 shows a schematic view of an aircraft including a window frame.
Figure 8 is a detailed view of the window frame of Figure 7.

### Preferred embodiments of the invention

The invention relates to a new method for manufacturing ring-shaped gaskets, intended for reducing the complexity of the manufacturing process and for reducing the cost by limiting the amount of wasted material.

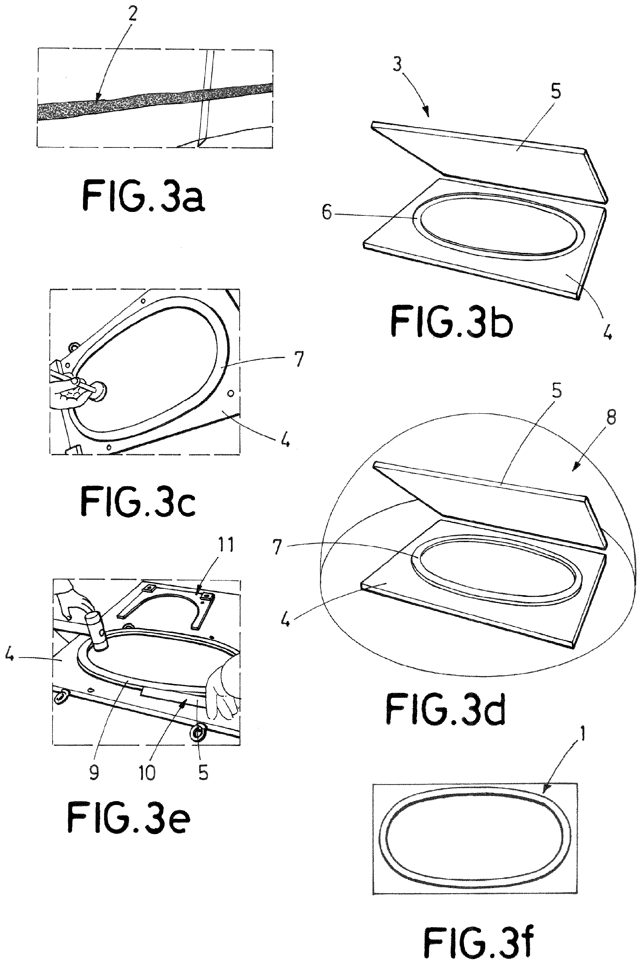

Figure 3 shows the steps of the overall process of the invention. Figure 3a shows a rod (2) made of prepreg composite material that could be manufactured using different known methods, such as pultrusion or extrusion. Using a rod (2) instead of a sheet of prepreg composite (22) reduces the amount of wasted material. The rod (2) could comprise glass fiber, carbon fiber or both of them.

Figure 3b shows the mold (3) provided for giving a ring-shaped geometry to the composite rod (2). The mold (3) has a female (4) and a male part (5). The female part (4) of the mold (3) comprises a groove (6), where the rod (2) is set for having the desired ring-shape. When the rod (2) is laid over the groove (6) of the female part (4), the male part (5) of the mold (3) is set over the female part (4) of the mold (3). Closing the mold (3), the rod (2) becomes a ring-shaped preform (7). As shown in Figure 3b, the male part (5) of the mold (3) is flat, being the rod (2) confined between the groove (6) of the female part (4) and the flat surface of the male part (5).

In another preferred embodiment, the male part (5) of the mold (3) comprises another groove, so that the rod (2) is confined between the grooves of the male (5) and female parts (4). Alternatively, the male part (5) may comprise a protuberance configured to fit in the groove (6) of the female part (4), so that the rod (2) is confined between the groove (6) of the female part (4) and the protuberance of the male part (5).

In another preferred embodiment of the invention, the mold (3) is modular, where at least one of the two parts (4, 5) of the mold (3) is configured to be splitted in at least two subparts (10, 11). This way, it would be easier to demold the ring-shaped preform (7), reducing manufacturing time and avoiding damaging the gasket in the demolding process.

Figure 3c shows the rod (2) set over the groove (6) of the female part (5) of the mold (3).

Figure 3d shows the debulking process of the ring-shaped preform (7). In this step, the air trapped inside the preform is extracted and the excess of resin is driven together with the air, this way the preform (7) acquires an optimal ratio resin-fiber, either being of carbon or glass fiber, leading to obtain a gasket (1) with better mechanical properties. Preferably, the vacuum process is done using a vacuum bag (8) set over both the mold (3) and the preform (7). Then, vacuum is done inside the bag (8), extracting the air trapped and the excess of resin from the preform.

After this step, the ring-shaped preform (7) is cured, preferably in an autoclave, at high temperature and pressure conditions.

Figure 3e shows the demolding process of the cured ring-shaped preform (9) from a modular mold (3) where the male part (5) is splitted in two subparts (10, 11) - halves in this case-. The demolding requires removing the first subpart (10) of the male part (5) of the mold (3), then, the second subpart (11), and finally, removing the cured ring-shaped preform (9).

Figure 3f shows the ring-shaped gasket (1) obtained according to the invention. For accomplish with dimensional requirements, the gasket (1) may be deburred removing rough edges or protuberances, giving to the ring-shaped gasket (1) a smooth surface finish. Also, the gasket (1) may be machined to obtain the desired thickness. This way, the gasket (1) has a high quality, because it is possible to achieve low tolerances and, at the same time, avoid time-consuming trimming operations.

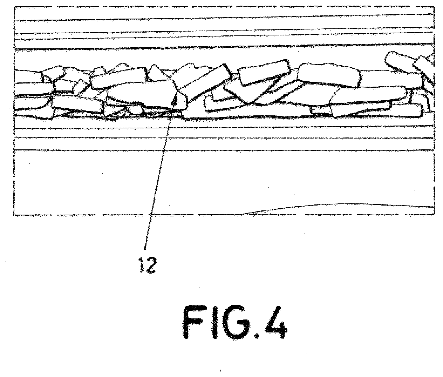

As shown in Figure 4, the rod (2) is made of composite chips (12). The composite chips (12) may come from wasted material, dismissed from other manufacturing processes, since, unlike structural elements, a gasket does not have high strength requirements. This way, it is possible to reduce costs and the environmental footprint, taking advantage of the wasted material instead of disposing it.

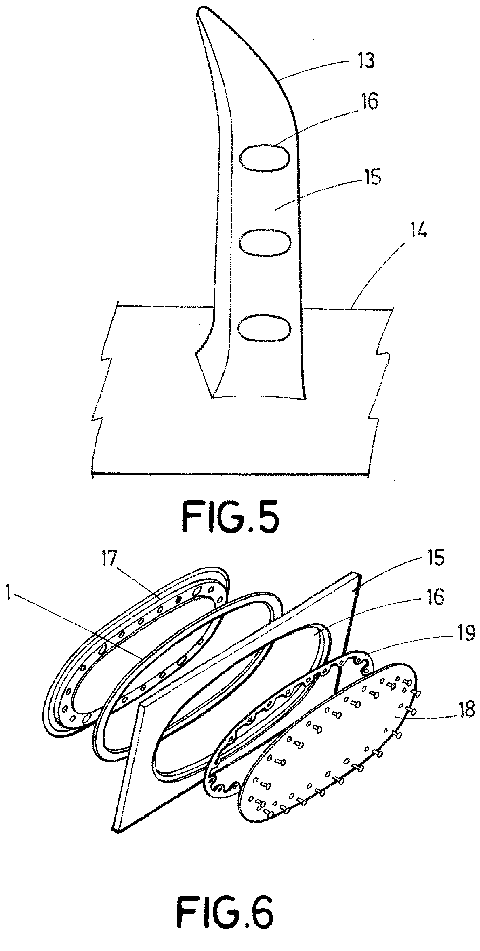

Figure 5 shows a bottom view of a wing (13) of an aircraft. The wing (13) has a skin (15), and is provided with manholes (16) located in the lower part of the same.

Figure 6 shows the detailed view of a manhole (16) of the wing (13). Each manhole (16) is covered by an inner (17) and an outer cover (18). The inner cover (17) is above the skin (15) of the manhole (16), located in the inside part of the wing (13), while the outer cover (18) is below the skin (15) of the manhole (16), located in the outside part of the wing (13). A gasket (1) obtained according to the invention is located between the inner cover (17) and the skin (15), filling surface roughness irregularities of both the inner cover (17) and the skin (15). The outer cover (18) of the skin (15) is set below the manhole (16), and a seal ring (19) is be set between them for avoiding leakage of fuel.

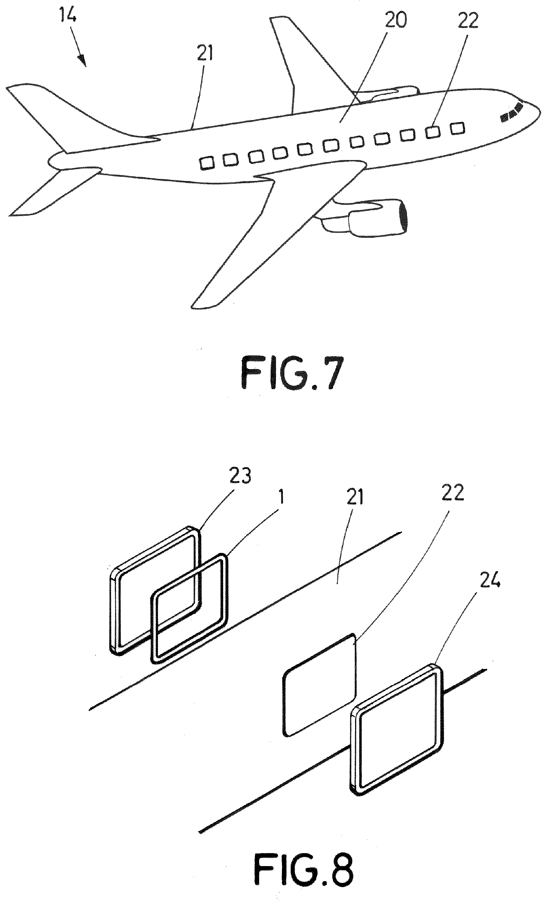

Figure 7 shows an aircraft (14) having a fuselage (20) that comprises a skin (21) and window frames (22).

Figure 8 is a detailed view of the window frame (22) of the fuselage (20). In a preferred embodiment, the window frame (22) is composed of two faces (23, 24), an inner face (23) and an outer face (24). A ring-shaped gasket (1) is set between the inner face (23) of the window frame (22) and the skin (21) of the fuselage (20), as an interface, and the outer face (24) is set on the opposed side of the skin (21).

## Claims

1. - A method for manufacturing a ring-shaped gasket (1) for an aircraft, comprising the following steps:
a) providing a rod (2) made of prepreg composite material,
b) providing a mold (3) having a female part (4) and a male part (5), at least the female part (4) having a groove (6) with the ring-shaped desired configuration,
c) placing the rod (2) onto the female part (4) and set the male part (5) over the ring-shaped rod to obtain a ring-shaped preform (7),
d) applying vacuum to debulk the ring-shaped preform (7),
e) curing the ring-shaped preform (7) to obtain a ring-shaped cured preform (9),
f) demolding the ring-shaped cured preform (9) to thus obtain a ring-shaped gasket (1),
wherein the rod (2) is formed by composite chips (12).

2. - A method for manufacturing a ring-shaped gasket (1) for an aircraft according to claim 1, wherein after step f) the ring-shaped gasket (1) is deburred so as to remove rough edges or protuberances.

3. - A method for manufacturing a ring-shaped gasket (1) for an aircraft according to any previous claims, wherein after step f) the ring-shaped gasket (1) is machined so as to obtain the desired thickness.

4. - A method for manufacturing a ring-shaped gasket (1) for an aircraft according to any previous claims, wherein the rod (2) is manufactured using extrusion or pultrusion techniques.

5. - A method for manufacturing a ring-shaped gasket (1) for an aircraft according to any previous claims, wherein the rod (2) comprises glass fiber.

6. - A method for manufacturing a ring-shaped gasket (1) for an aircraft according to any previous claims, wherein the rod (2) comprises carbon fiber.

7. - A method for manufacturing a ring-shaped gasket (1) for an aircraft according to any previous claims, wherein step d) is carried out using an autoclave to provide temperature and pressure conditions.

8. - A wing (13) for an aircraft (14) having a skin (15) provided with manholes (16), an inner cover (17) and an outer cover (18) to cover the manholes (16) of the skin (15), and a ring-shaped gasket (1) obtained according to claims 1 to 7, wherein the gasket (1) is placed between the inner cover (17) and the skin (15) of the wing (13).

9. - A wing (13) according to claim 8, further comprising a seal ring (19) placed between the outer cover (18) and the skin (15) of the wing (13).

10. - An aircraft (14) having a fuselage (20) comprising a skin (21), at least one window frame (22) and a ring-shaped gasket (1) obtained according to claims 1 to 7, wherein the window frame (22) has an inner face (23) and an outer face (24), and the ring-shaped gasket (1) is located between the fuselage skin (21) and the inner face (23) of the window frame (22).

## Patentansprüche

1. Verfahren zum Herstellen einer ringförmigen Dichtung (1) für ein Luftfahrzeug, umfassend die folgenden Schritte:
a) Bereitstellen eines Stabs (2) aus Prepreg-Verbundmaterial,
b) Bereitstellen einer Form (3) mit einem Matrizenteil (4) und einem Patrizenteil (5), wobei zumindest der Matrizenteil (4) eine Nut (6) mit der ringförmigen gewünschten Auslegung aufweist,
c) Platzieren des Stabs (2) auf dem Matrizenteil (4) und Setzen des Patrizenteils (5) über den ringförmigen Stab, um einen ringförmigen Vorformling (7) zu erhalten,
d) Aufbringen von Vakuum zum Verdichten des ringförmigen Vorformlings (7),
e) Aushärten des ringförmigen Vorformlings (7), um einen ringförmigen ausgehärteten Vorformling (9) zu erhalten,
f) Entformen des ringförmigen ausgehärteten Vorformlings (9), um so eine ringförmige Dichtung (1) zu erhalten,
wobei der Stab (2) aus Verbundspänen (12) ausgebildet ist.

2. Verfahren zum Herstellen einer ringförmigen Dichtung (1) für ein Luftfahrzeug nach Anspruch 1, wobei nach Schritt f) die ringförmige Dichtung (1) entgratet wird, um raue Kanten und Vorsprünge zu entfernen.

3. Verfahren zum Herstellen einer ringförmigen Dichtung (1) für ein Luftfahrzeug nach einem der vorhergehenden Ansprüche, wobei nach Schritt f) die ringförmige Dichtung (1) maschinell bearbeitet wird, um die gewünschte Dicke zu erhalten.

4. Verfahren zum Herstellen einer ringförmigen Dichtung (1) für ein Luftfahrzeug nach einem der vorhergehenden Ansprüche, wobei der Stab (2) mithilfe von Extrusions- oder Pultrusionstechniken hergestellt wird.

5. Verfahren zum Herstellen einer ringförmigen Dichtung (1) für ein Luftfahrzeug nach einem der vorhergehenden Ansprüche, wobei der Stab (2) Glasfaser umfasst.

6. Verfahren zum Herstellen einer ringförmigen Dichtung (1) für ein Luftfahrzeug nach einem der vorhergehenden Ansprüche, wobei der Stab (2) Carbonfaser umfasst.

7. Verfahren zum Herstellen einer ringförmigen Dichtung (1) für ein Luftfahrzeug nach einem der vorhergehenden Ansprüche, wobei Schritt d) mithilfe eines Autoklavs zum Bereitstellen von Temperatur- und Druckbedingungen ausgeführt wird.

8. Tragfläche (13) für ein Luftfahrzeug (14) mit einer Haut (15), die mit Mannlöchern (16) versehen ist, einer Innenabdeckung (17) und einer Außenabdeckung (18) zum Abdecken der Mannlöcher (16) der Haut (15) und einer ringförmigen Dichtung (1), die gemäß den Ansprüchen 1 bis 7 erhalten wird, wobei die Dichtung (1) zwischen der Innenabdeckung (17) und der Haut (15) der Tragfläche (13) platziert ist.

9. Tragfläche (13) nach Anspruch 8, ferner umfassend einen Dichtungsring (19), der zwischen der Außenabdeckung (18) und der Haut (15) der Tragfläche (13) platziert ist.

10. Luftfahrzeug (14) mit einem Rumpf (20), der eine Außenhaut (21), mindestens einen Fensterrahmen (22) und eine ringförmige Dichtung (1) umfasst, die gemäß den Ansprüchen 1 bis 7 erhalten wurde, wobei der Fensterrahmen (22) eine Innenfläche (23) und eine Außenfläche (24) aufweist, und wobei die ringförmige Dichtung (1) zwischen der Rumpfhaut (21) und der Innenfläche (23) des Fensterrahmens (22) angeordnet ist.

## Revendications

1. Procédé de fabrication d'un joint annulaire (1) pour un aéronef, comprenant les étapes suivantes :
a) la fourniture d'une tige (2) constituée de matériau composite préimprégné,
b) la fourniture d'un moule (3) ayant une partie femelle (4) et une partie mâle (5), au moins la partie femelle (4) ayant une rainure (6) avec la configuration annulaire désirée,
c) le placement de la tige (2) sur la partie femelle (4) et l'installation de la partie mâle (5) sur la tige annulaire pour obtenir une ébauche annulaire (7),
d) l'application de vide pour réduire le volume de l'ébauche annulaire (7),
e) le durcissement de l'ébauche annulaire (7) pour obtenir une ébauche annulaire durcie (9),
f) le démoulage de l'ébauche annulaire durcie (9) pour ainsi obtenir un joint annulaire (1),
dans lequel la tige (2) est constituée de copeaux composites (12).

2. Procédé de fabrication d'un joint annulaire (1) pour un aéronef selon la revendication 1, dans lequel après l'étape f) le joint annulaire (1) est ébavuré de manière à éliminer des bords rugueux ou des protubérances.

3. Procédé de fabrication d'un joint annulaire (1) pour un aéronef selon l'une quelconque des revendications précédentes, dans lequel après l'étape f) le joint annulaire (1) est usiné de manière à obtenir l'épaisseur désirée.

4. Procédé de fabrication d'un joint annulaire (1) pour un aéronef selon l'une quelconque des revendications précédentes, dans lequel la tige (2) est fabriquée à l'aide de techniques d'extrusion ou de pultrusion.

5. Procédé de fabrication d'un joint annulaire (1) pour un aéronef selon l'une quelconque des revendications précédentes, dans lequel la tige (2) comprend de la fibre de verre.

6. Procédé de fabrication d'un joint annulaire (1) pour un aéronef selon l'une quelconque des revendications précédentes, dans lequel la tige (2) comprend de la fibre de carbone.

7. Procédé de fabrication d'un joint annulaire (1) pour un aéronef selon l'une quelconque des revendications précédentes, dans lequel l'étape d) est réalisée à l'aide d'un autoclave pour fournir des conditions de température et de pression.

8. Aile (13) pour un aéronef (14) ayant un revêtement (15) pourvu de regards (16), un cache interne (17) et un cache externe (18) pour couvrir les regards (16) du revêtement (15), et un joint annulaire (1) obtenu selon les revendications 1 à 7, dans lequel le joint (1) est placé entre le cache interne (17) et le revêtement (15) de l'aile (13).

9. Aile (13) selon la revendication 8, comprenant en outre un joint annulaire (19) placé entre le cache externe (18) et le revêtement (15) de l'aile (13).

10. Aéronef (14) ayant un fuselage (20) comprenant un revêtement (21), au moins un encadrement de hublot (22) et un joint annulaire (1) obtenu selon les revendications 1 à 7, dans lequel l'encadrement de hublot (22) a une face interne (23) et une face externe (24), et le joint annulaire (1) est situé entre le revêtement de fuselage (21) et la face interne (23) de l'encadrement de hublot (22).
